# EUROPÄISCHE PATENTSCHRIFT

(11) **EP 0 356 681 B1**
(45) Veröffentlichungstag und Bekanntmachung des Hinweises auf die Patenterteilung: **19.05.1993**
(21) Anmeldenummer: 89113101.3
(22) Anmeldetag: 18.07.1989
(51) Int. Cl.: C09B 62/09, C09B 62/513, D06P 1/38

(54) **Disazoreaktivfarbstoffe**
Disazo dyes
Colorants réactifs disazoiques

(30) Priorität: 30.07.1988 DE 3826060; 10.11.1988 DE 3838127
(43) Veröffentlichungstag der Anmeldung: 07.03.1990
(73) Patentinhaber: BAYER AG, 51368 Leverkusen (DE)
(72) Erfinder: Jäger, Horst, Dr., D-5090 Leverkusen (DE)

(56) Entgegenhaltungen:
- DE-A- 3 512 690
- FR-A- 906 128
- CHEMICAL ABSTRACTS, Band 107, Nr. 14, Oktober 1987, Seite 70, Zusammenfassung Nr. 116954w, Columbus, Ohio, US; & JP-A-87 84 160 (MITSUBISHI CHEMICAL INDUSTRIES CO., LTD) 17-04-1987
- CHEMICAL ABSTRACTS, Band 107, Nr. 14, Oktober 1987, Seite 70, Zusammenfassung Nr. 116955x, Columbus, Ohio, US; & JP-A-62 84 159 (MITSUBISHI CHEMICAL INDUSTRIES CO., LTD) 17-04-1987

## Beschreibung

Gegenstand der vorliegenden Erfindung sind Disazofarbstoffe der allgemeinen Formel: 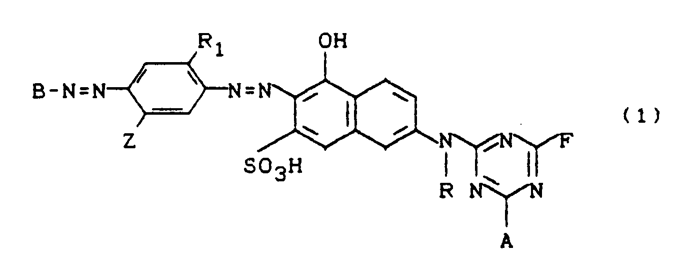
wobei 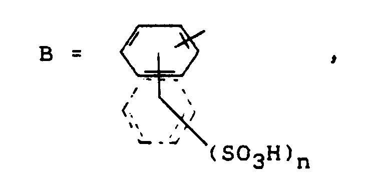
worin B übliche Substituenten enthalten kann und
n = 1, 2 oder 3
- R =: H oder CH₃
- R₁ =: SO₃H oder COOH
- A =: gegebenenfalls substituierte Aminogruppe
- Z =: H oder CH₃, C₂H₅, OCH₃, OC₂H₅, OCH₂CH₂OH, OCH₂CH₂OSO₃H, OH, 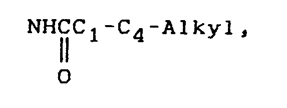 wobei die C₁-C₄-Alkylreste durch COOH, SO₃H, OSO₃H, OH substituiert sein können, 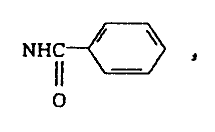 wobei der Phenylrest durch COOH, SO₃H, Cl, CH₃, OCH₃ substituiert sein kann, 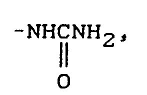 wobei für Z = H und R₁ = SO₃H

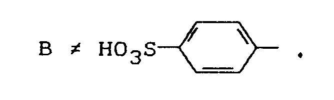

Aus der DE-A 3 512 690 sind bereits Chlortriazinfarbstoffe bekannt, deren anwendungstechnische Eigenschaften zu wünschen übrig lassen. In der EP-A-357 915 ist eine Verbindung gemäß Formel (I) angegeben, bei der Z = H, R₁ = SO₃H und B = Sulfophenyl.

Beispiele für Substituenten von B sind folgende; Cl, CH₃, OCH₃, OC₂H₅, NO₂, COOH, C₂H₅, NHCOCH₃.

Als Reste A kommen beispielsweise solche der Formel 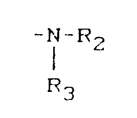
in Frage, worin
- R₂ =: H oder gegebenenfalls substituierter Alkylrest,
- R₃ =: H, gegebenenfalls substituierter Alkyl-, Aryl- oder Cyclohexyl-Rest oder R₂ und R₃ bilden gegebenenfalls unter Einschluß eines Heteroatoms einen Ring.

Die Alkylreste R₂ und R₃ können Heteroatome oder Heteroatomgruppierungen enthalten, beispielsweise O, S, 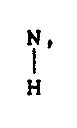 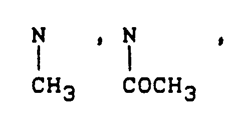
NHCO, NHSO₂, SO₂.

Geeignete Substituenten der Alkylreste R₂ und R₃ sind beispielsweise Cl, Br, OH, OCH₃, OC₂H₅, COOH, CN, SO₃H, OSO₃H. Die Alkylreste R₂ und R₃ weisen vorzugsweise 1 bis 6 C-Atome auf.

Die Arylreste R₃ bedeuten vorzugsweise Phenyl- oder Naphthylreste. Beispiele für Substituenten der Arylreste R₃ sind beispielsweise:
C₁-C₄-Alkyl, wie CH₃, C₂H₅, C₁-C₄-Alkoxy, wie OCH₃, OC₂H₅, Halogen, wie F, Cl, Br, COOH, NO₂, NH₂, SO₃H, CH₂CH₂OH, CH₂CH₂OSO₃H, SO₂CH₂CH₂OSO₃H

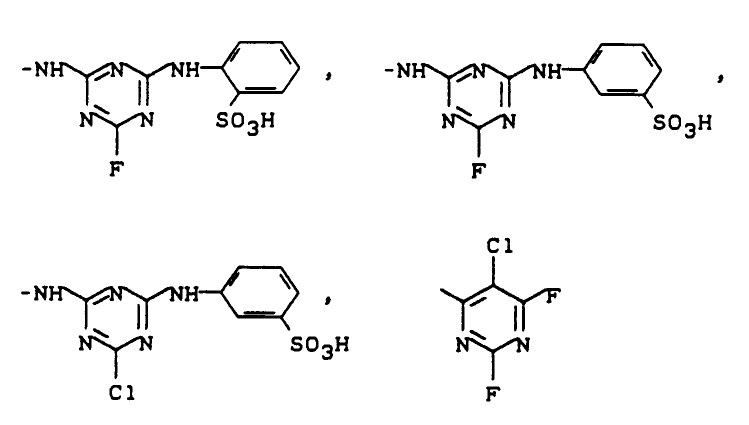

Beispiele für Reste 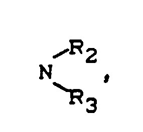
in denen R₂ und R₃ gegebenenfalls unter Einschluß eines Heteroatoms einen Ring bilden, sind:

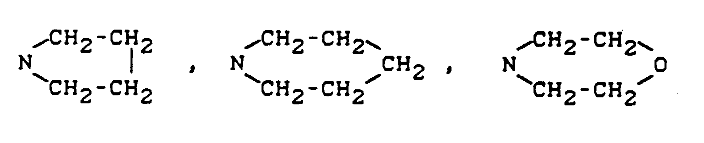

Im Rahmen der Formel (1) sind generell Farbstoffe bevorzugt, für die
- R =: H,
- R₁ =: SO₃H,
- Z =: H, CH₃, OH, OCH₃, NHCOCH₃,
- B =: Benzolrest mit n = 1 oder 2,
- B =: Naphthalinrest mit n = 2 oder 3,

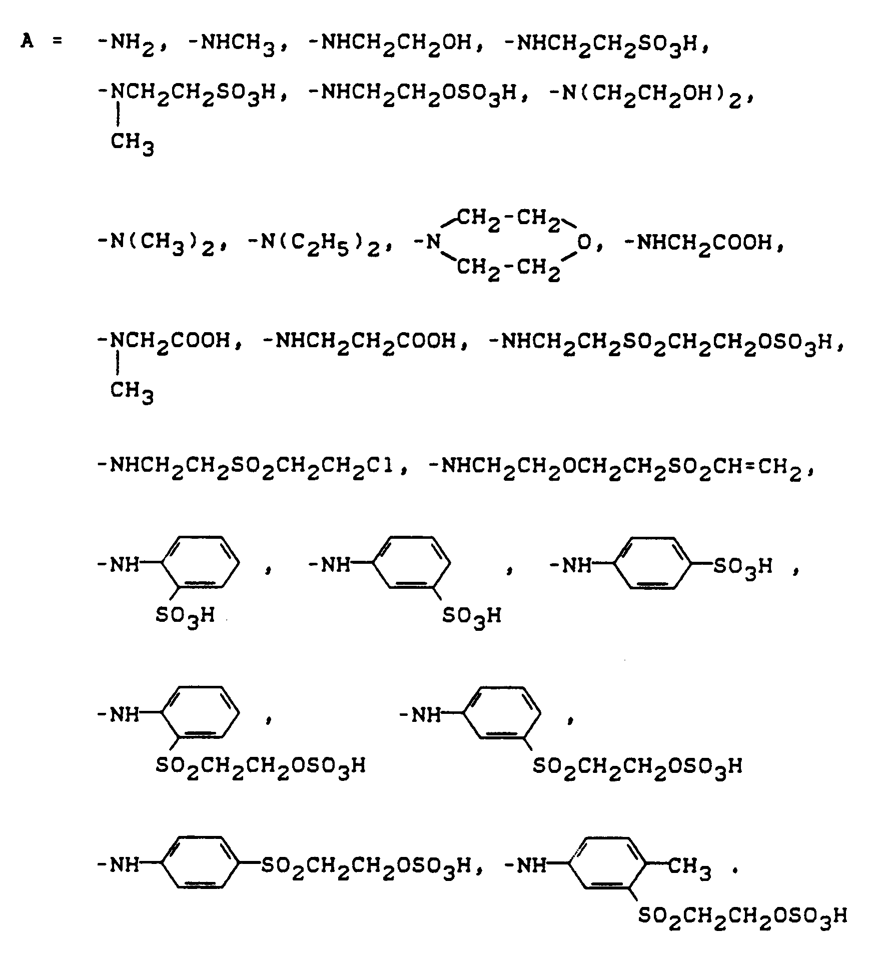

Gegenstand der Erfindung sind weiterhin die folgenden Verfahren zur Herstellung der Farbstoffe der Formel (1):
1. Ein Disazofarbstoff der Formel 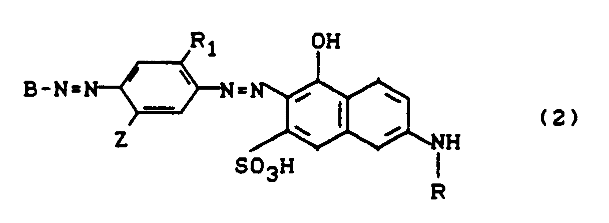 wird zunächst mit 2,4,6-Trifluortriazin unter Abspaltung von Flußsäure kondensiert und die resultierende Difluorverbindung mit einem Amin der Formel

   H-A (3)

   unter Abspaltung von Flußsäure zu einem Farbstoff der Formel (1) umgesetzt.
2. Eine Aminohydroxynaphthalinsulfonsäure der Formel 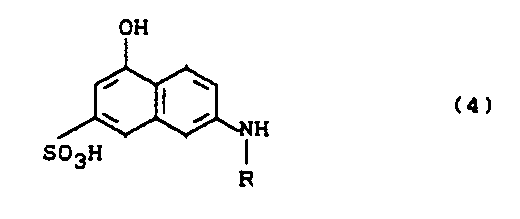 wird mit 2,4,6-Trifluortriazin kondensiert unter Abspaltung von Flußsäure und die resultierende Difluorverbindung mit einem Amin der Formel (3) umgesetzt. Die dabei erhaltene Kupplungskomponente der Formel 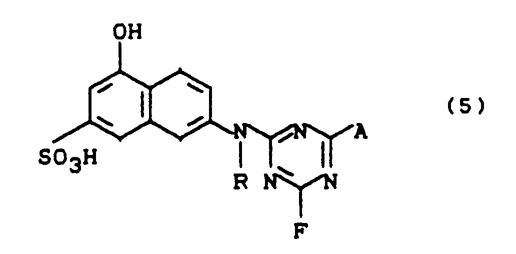 wird mit einer Diazokomponente der Formel 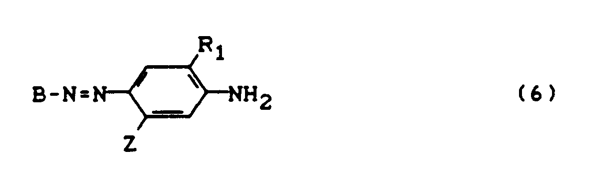 zu einem Farbstoff der Formel (1) vereinigt.
3. Ein Amin der Formel (3) wird mit 2,4,6-Trifluortriazin unter Abspaltung von Flußsäure zu einer Difluorverbindung der Formel: 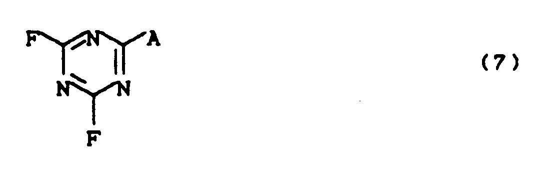 kondensiert und diese mit einer Kupplungskomponente der Formel (4) zu einer Verbindung der Formel (5) unter Abspaltung von Flußsäure umgesetzt und diese anschließend mit einer Diazokomponente (6) gekuppelt.

Die Kondensation der Verbindungen der Formel (2), (3) und (4) mit dem 2,4,6-Trifluortriazin erfolgt vorzugsweise in wäßriger Lösung oder Suspension bei niedriger Temperatur und vorzugsweise bei etwa 0°C und bei schwach saurem, neutralem bis schwach alkalischem pH. Der freiwerdende Fluorwasserstoff wird durch Zugabe wäßriger Alkalihydroxide-, -carbonate oder -bicarbonate abgestumpft. Die Umsetzung der Difluorverbindungen mit den entsprechenden Reaktionspartnern erfolgt ebenfalls vorzugsweise in wäßriger Lösung oder Suspension bei niedriger Temperatur, vorzugsweise bei 0 bis 20°C und bei schwach saurem bis schwach alkalischem pH.

Bei der Acylierung von (2) setzt man im allgemeinen die Na- oder K-Salze ein. Besonders günstig erweist sich - insbesondere für die Fälle, daß
- B =: Phenylrest mit n = 1 oder
- B =: Naphthylrest mit n = 1 oder 2 -
die Verwendung eines gemischten Li-Na- bzw. Li-K-, bzw. Li-Na-K-Salzes von (2), die man ausgehend von den entsprechenden Betainen durch Neutralisation mit 1 Mol Li-Base erhält.

Der bei der Kondensation von (2), (3) oder (4) mit Trifluortriazin freiwerdende Fluorwasserstoff wird generell bevorzugt durch Li-Basen, beispielsweise LiOH abgefangen.

Die Farbstoffe der Formel (2) erhält man durch Kupplung von diazotierten Aminen der Formel (6) mit den N-acylierten Kupplungskomponenten der Formel (4) im schwach sauren bis schwach alkalischen Bereich. Der Acylrest wird anschließend durch Erhitzen mit Säuren oder Laugen abgespaltet. Beispiele für einen Acylrest sind Acetyl oder Carbamoyl.

Als Amine der Formel (3), die als Ausgangsstoffe zur Herstellung der faserreaktiven Farbstoffe der Formel (1) verwendet werden können, seien beispielsweise die folgenden genannt:
Ammoniak, Methylamin, Dimethylamin, Ethylamin, Diethylamin, Propylamin, Isopropylamin, Butylamin, Dibutylamin, Isobutylamin, sek.-Butylamin, Hexylamin, Methoxyethylamin, Ethoxyethylamin, Methoxypropylamin, Chlorethylamin, Hydroxyethylamin, Dihydroxyethylamin, Hydroxypropylamin, Aminoethansulfonsäure, β-Sulfatoethylamin, N-Methylaminoethansulfonsäure, Methylaminomethansulfonsäure, Aminoessigsäure, N-Methylaminoessigsäure, β-Aminopropionsäure, β-Sulfatoethyl-β′-aminoethylsulfon, δ-Aminobutansulfonsäure, β-Aminoethoxyethyl-β′-sulfatoethyl-sulfon, β-Aminoethoxyethyl-vinyl-sulfon, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Ethylanilin, 3- oder 4-Acetylaminanilin, o-, m- und p-Nitroanilin, o-, m- und p-Aminophenyl, 2-Methyl-4-nitroanilin, 2-Methyl-5-nitroanilin, 2,5-Dimethoxyanilin, 3-Methyl-4-nitro anilin, 3-Nitro-4-methylanilin, o-, m- und p-Anisidin, o-, m- und p-Phenetidin, 2-Methoxy-5-methylanilin, 2-Ethoxy-5-methoxyanilin, 4-Bromanilin, 4-Aminophenylsulfamid, 3-Trifluormethylanilin, 3- und 4-Aminophenylharnstoff, 1-Naphthylamin, 2-Naphthylamin, 2-Amino-1-hydroxynaphthalin, 1-Amino-4-hydroxynaphthalin, 1-Amino-8-hydroxynaphthalin, 1-Amino-2-hydroxynaphthalin, 1-Amino-7-hydroxynaphthalin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, 2-Aminotoluol-4-sulfonsäure, 2-Aminotoluol-5-sulfonsäure, p-Aminosalicylsäure, 1-Amino-4-carboxybenzol-3-sulfonsäure, 1-Amino-2-carboxybenzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7-und -8-sulfonsäure, 1-Naphthylamin-2,4-, -2,5-, -2,7-, -2,8-, -3,5-, -3,6-, -3,7-, -3,8-, -4,6-, -4,7-, -4,8-und -5,8-disulfonsäure, 2-Naphthylamin-1,5-, -1,6-, -1,7, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Napthylamin-1,3,7-, -1,5,7-, -3,5,7-, -3,6,7-, -3,6,8-und -4,6,8-trisulfonsäure, 2-, 3- und 4-Aminopyrimidin, 2-Aminobenzthiazol, 5-, 6- und 8-Aminochinolin, 2-Aminopyrimidin, Morpholin, Piperidin und Piperazin. N-β-Hydroxyethylanilin, Semicarbazid, Benzoesäurehydrazid, 4-(β-Sulfatoethylsulfonyl)-anilin, 3-(β-Sulfatoethylsulfonyl)-anilin, 4-Amino-1-methoxy-benzol-2-sulfonsäure, 4-Amino-1-ethoxy-benzol-2-sulfon-säure, 4-Aminophenol-6-sulfonsäure, 2-Aminophenol-5-sulfonsäure, 4-Aminotoluol-2-sulfonsäure, β-N-Methylaminopropionitril, β-Aminopropionitril, Aminoessigsäure.

Beispiele für Diazokomponenten der Formel (6) sind folgende

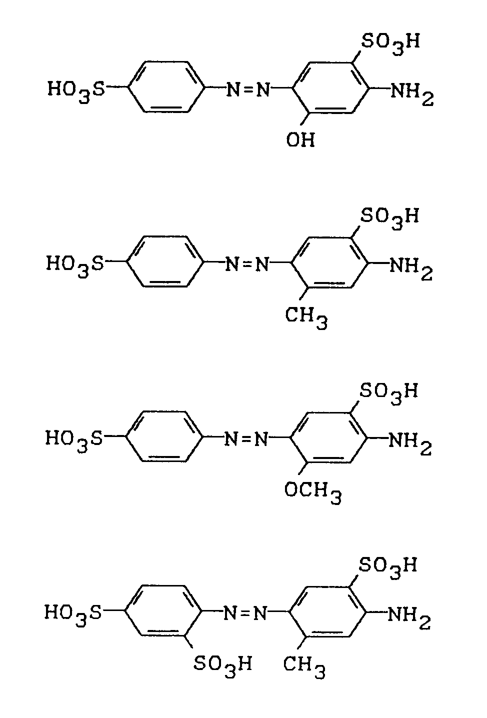

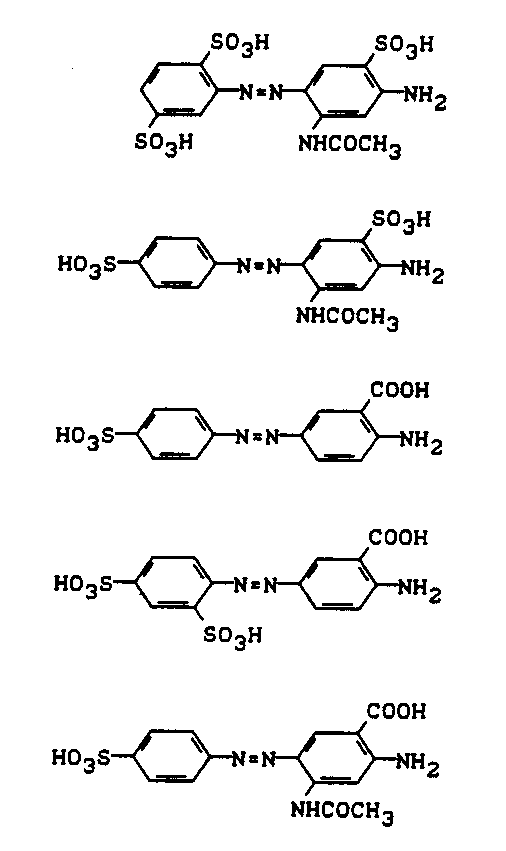

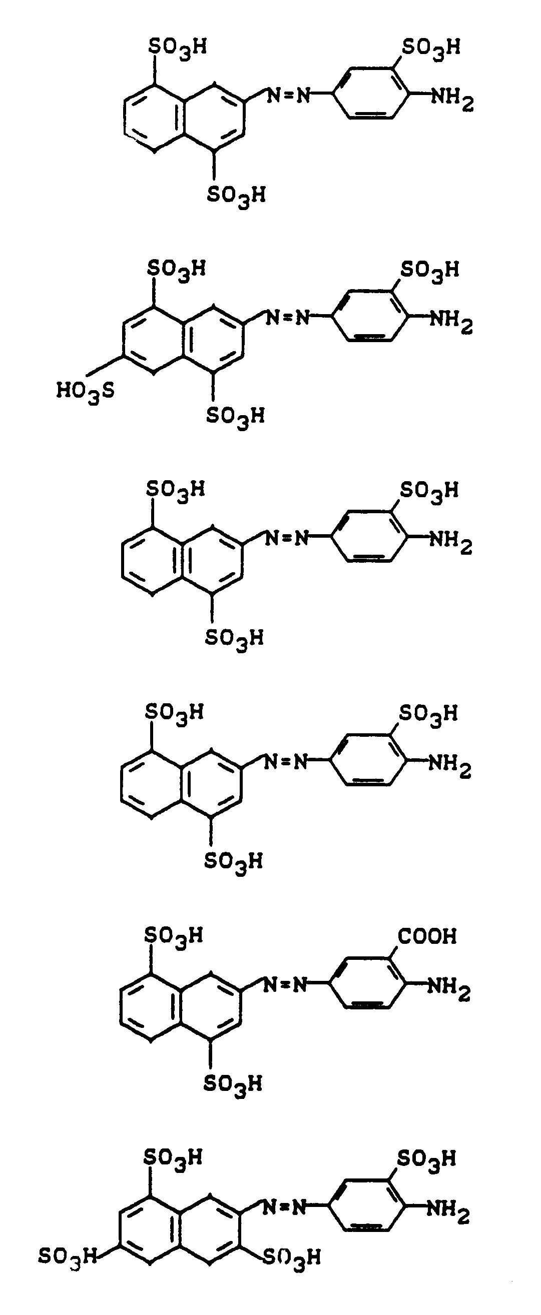

Die neuen Farbstoffe geben auf Cellulose- sowie natürlichen synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um °C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Colour Index Hue Indication Chart (Indicator Numbers).

### Beispiel 1

0,1 Mol des Farbstoffs der Formel 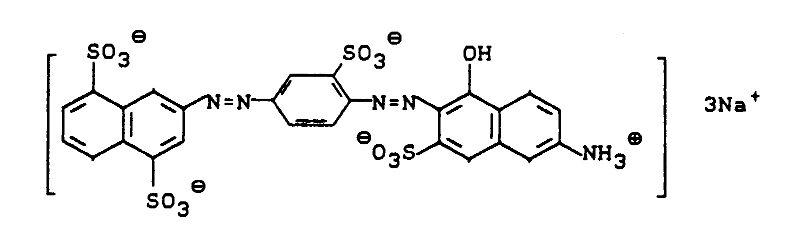
werden in 1 l Wasser angerührt und durch Zugabe von 0,1 Mol LiOH neutral gelöst. Man wirft dann 500 g Eis ein und tropft anschließend 13,5 g Trifluortriazin zu, wobei die freiwerdende Flußsäure durch LiOH-Lösung abgestumpft wird. Nach beendeter Kondensation läßt man 0,1 Mol N-Methyltaurin in wäßriger Lösung einlaufen. Der Austausch des zweiten Fluoratom erfolgt bei 8,5 bis 9 und 0° bis 5°C, wobei gleichfalls die freiwerdende Flußsäure durch Lithiumhydroxid neutralisiert wird. Der Farbstoff wird durch Aussalzen mit 25 Vol.-% Kaliumchlorid abgeschieden. Nach dem Absaugen, Trocknen und Mahlen erhält man ein in Wasser leicht lösliches rotes Farbstoffpulver.

Der Farbstoff entspricht in Form der freien Säure der Formel

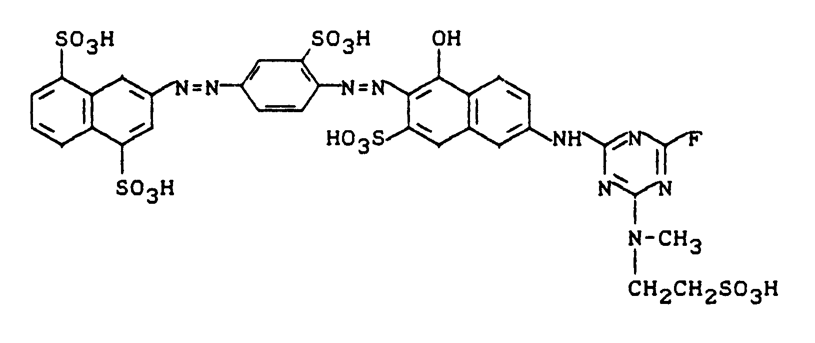

Er färbt Baumwolle nach einem der für Reaktivfarbstoffe üblichen Verfahren in klaren roten Tönen (Farbkennzahl 8).

Ersetzt man in diesem Beispiel N-Methyltaurin durch die in Tabelle 1 genannten Amine, so erhält man gleichfalls gut wasserlösliche Reaktivfarbstoffe, die Baumwolle rot färben.

**Tabelle 1**

| Beispiel | Amin |
|---|---|
| 1 | H₂N-CH₂-CH₂-NHCO-CH₂-CH₂-COOH |
| 2 | Methylaminomethansulfonsäure |
| 3 | Ethylaminomethansulfonsäure |
| 4 | Taurin |
| 5 | Aminoessigsäure |
| 6 | Methylaminoessigsäure |
| 7 | Aminoethylsulfat = β-Sulfatoethylamin |
| 8 | N-Methyl-N-β-sulfatoethylamin |
| 9 | β-Sulfatoethyl-β′-aminoethyl-sulfon |
| 10 | β-Sulfatoethyl-β′-sulfatoethyl-amin |
| 11 | β-Aminopropionsäure |
| 12 | δ-Aminobutansulfonsäure |
| 13 | H₂N-CH₂-CH₂-O-CH₂-CH₂-SO₂-CH₂-CH₂-OSO₃H |
| 14 | H₂N-CH₂-CH₂-O-CH₂-CH₂-SO₂-CH₂-CH₂-Cl |
| 15 | H₂N-CH₂-CH₂-O-CH₂-CH₂-SO₂-CH=CH₂ |

Gleichfalls wertvolle Farbstoffe erhält man, wenn man von den nachfolgend aufgeführten Aminodisazofarbstoffen ausgeht, die im Beispiel 1 und in der Tabelle 1 verwendeten Amine für den Austausch des zweiten Fluoratoms einsetzt und wie in Beispiel 1 angegeben verfährt.

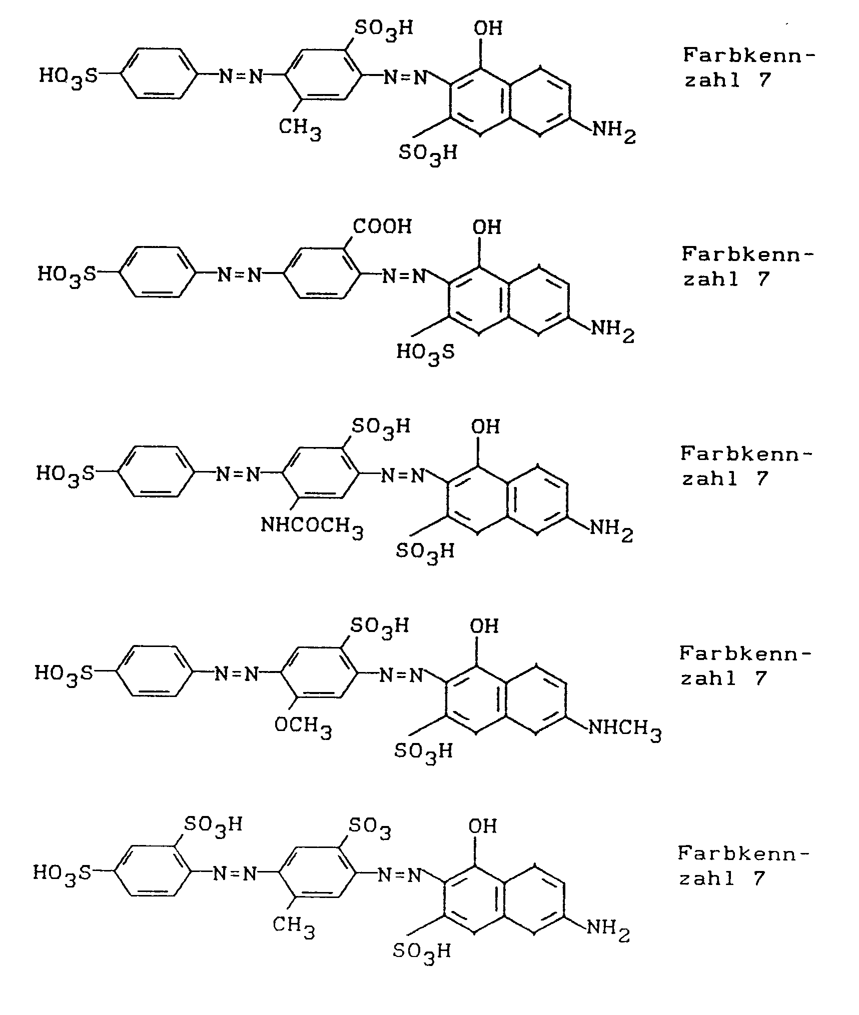

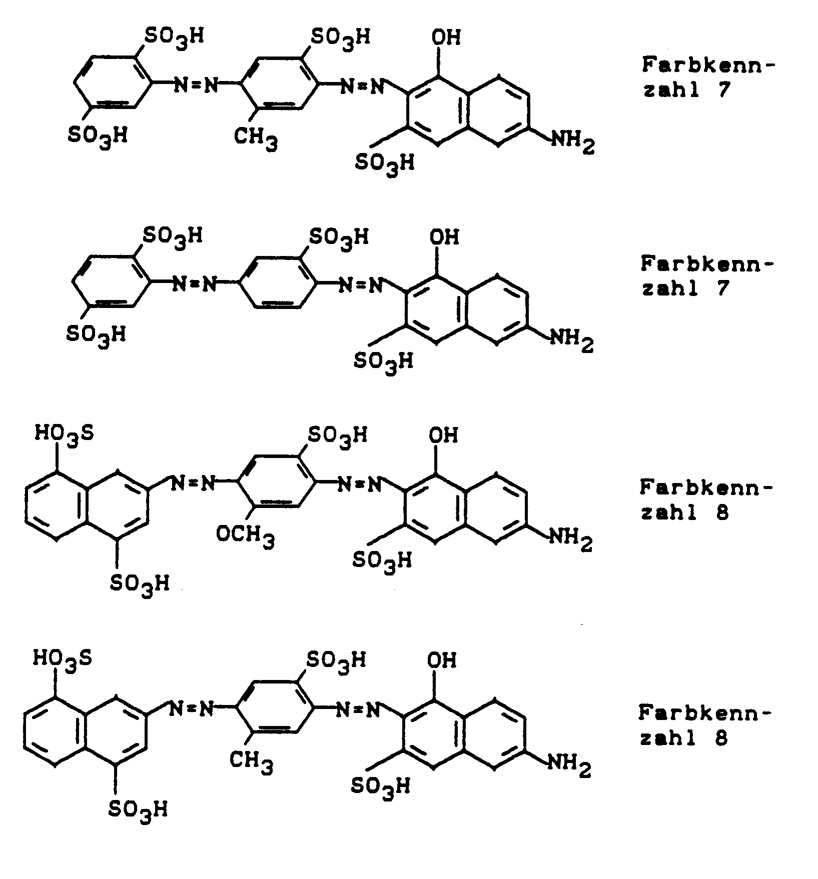

### Beispiel 2

0,1 Mol des Farbstoffs der Formel 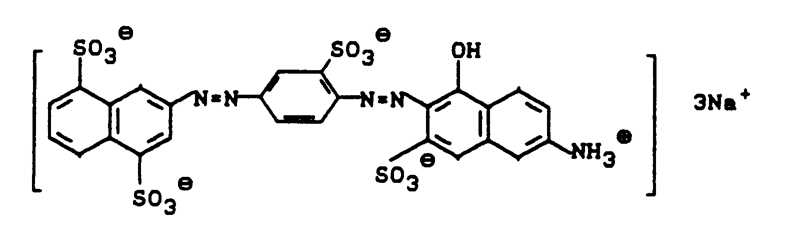
werden in 1 l Wasser angerührt und durch Zugabe von 0,1 Mol LiOH neutral gelöst. Man wirft dann 500 g Eis ein und tropft anschließend 13,5 g Trifluortriazin zu, wobei die freiwerdende Flußsäure durch LiOH-Lösung abgestumpft wird. Nach beendeter Kondensation läßt man 0,1 Mol m-Sulfanilsäure in wäßriger Lösung einlaufen. Der Austausch des zweiten Fluoratom erfolgt bei pH 6 bis 7 und 0° bis 15°, wobei gleichfalls die freiwerdende Flußsäure durch Lithiumhydroxid neutralisiert wird. Der Farbstoff wird durch Aussalzen mit 10 Vol.-% Natriumchlorid abgeschieden. Nach dem Absaugen, Trocknen und Mahlen erhält man ein in Wasser leicht lösliches rotes Farbstoffpulver.

Der Farbstoff entspricht in Form der freien Säure

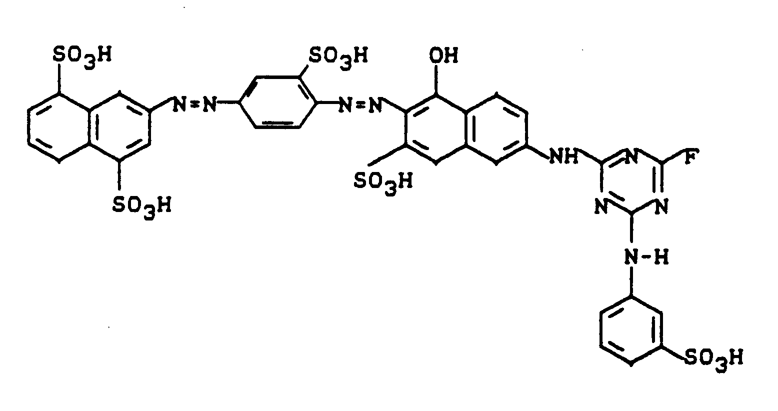

Nach einem der für Reaktivfarbstoffe üblichen Verfahren färbt er Baumwolle in roten Tönen (Farbkennzahl 8).

Ersetzt man in Beispiel 2 die m-Sulfanilsäure duch die in Tabelle 2 genannten Amine und verfährt wie angegeben, so erhält man gleichfalls gut wasserlösliche Reaktivfarbstoffe, die Baumwolle in roten Tönen färben (Farbkennzahl 8).

**Tabelle 2**

| Beispiele | Amin |
|---|---|
| 1 | p-Sulfanilsäure |
| 2 | 1-Amino-4-methoxy-benzol-3-sulfonsäure |
| 3 | 1-Amino-4-chlor-benzol-3-sulfonsäure |
| 4 | 1-Amino-4-methyl-benzol-3-sulfonsäure |
| 5 | 1-Amino-benzol-3-carbonsäure |
| 6 | N-Ethylanilin |
| 7 | N-β-Oxyethylanilin |
| 8 | Anilin |
| 9 | N-Methylanilin |

Gleichfalls wertvolle Farbstoffe erhält man, wenn man von dem nachfolgend aufgeführten Aminodisazofarbstoffen ausgeht, die im Beispiel 2 und in der Tabelle 2 verwendeten Amine für den Austausch des zweiten Fluoratoms einsetzt und nach den Angaben von Beispiel 2 verfährt.

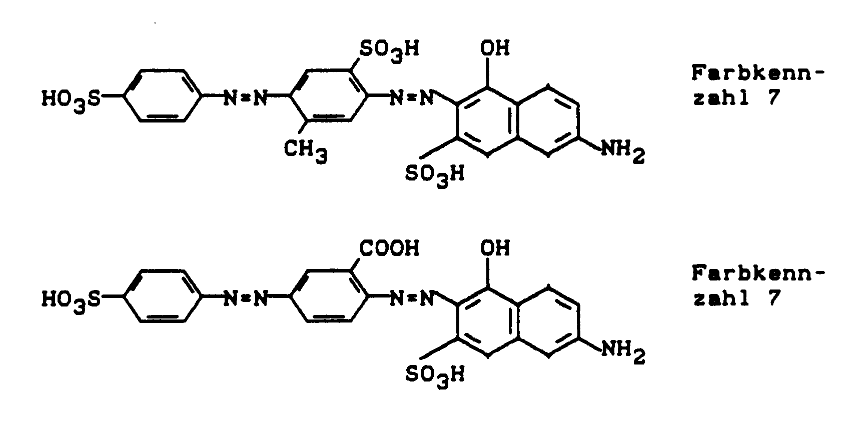

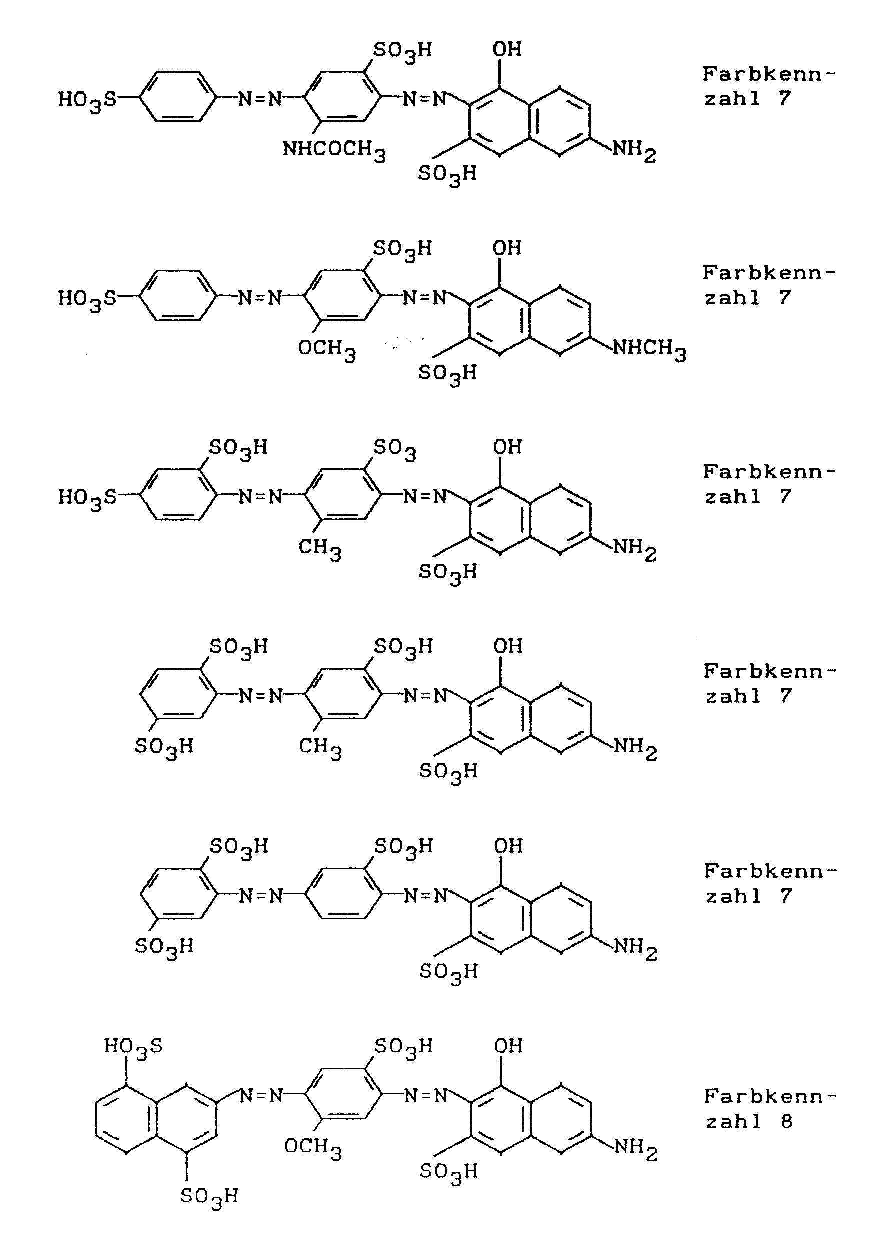

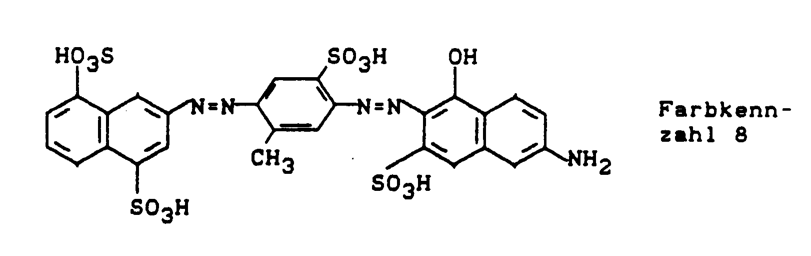

### Beispiel 3

0,1 Mol des Farbstoffs der Formel 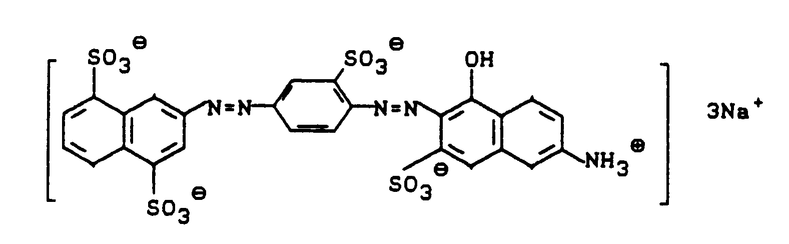
werden in 1 l Wasser angerührt und durch Zugabe von 0,1 Mol LiOH neutral gelöst. Man wirft dann 500 g Eis ein und tropft anschließend 13,5 g Trifluortriazin zu, wobei die freiwerdende Flußsäure durch LiOH-Lösung abgestumpft wird. Nach beendeter Kondensation läßt man 0,1 Mol 1-Aminobenzol-3-β-sulfatoethylsulfon in wäßriger Lösung einlaufen. Der Austausch des zweiten Fluoratom erfolgt bei pH 6 bis 7 und 0° bis 15°, wobei gleichfalls die freiwerdende Flußsäure durch Lithiumhydroxid neutralisiert wird. Der Farbstoff wird durch Aussalzen mit 10 Vol.-% Natriumchlorid abgeschieden. Nach dem Absaugen, Trocknen und Mahlen erhält man ein in Wasser leicht lösliches rotes Farbstoffpulver.

Der Farbstoff entspricht in Form der freien Säure der Formel

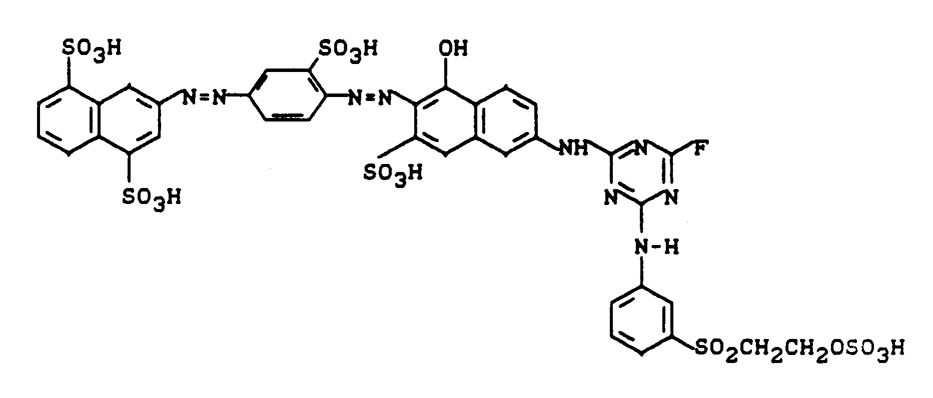

Es färbt Baumwolle nach einem der für Reaktivfarbstoffe üblichen Verfahren in klaren roten Tönen (Farbkennzahl 8).

Ersetzt man in Beispiel 3 1-Aminobenzol-3-β-sulfatoethylsulfon durch die in Tabelle 3 genannten Amine, so erhält man gleichfalls gut wasserlösliche Reaktivfarbstoffe, die Baumwolle rot färben.

**Tabelle 3**

| Beispiel | Amin |
|---|---|
| 1 | 1-Aminobenzol-4-β-sulfatoethylsulfon |
| 2 | 1-Amin-4-methyl-benzol-3-β-sulfatoethylsulfon |
| 3 | 1-Amino-4-methoxy-benzol-3-β-sulfatoethylsulfon |
| 4 | 1-Amino-benzol-3-β-phosphatoethylsulfon |
| 5 | 1-Amino-2,5-dimethoxy-benzol-4-vinylsulfon |
| 6 | 1-Amino-2-methyl-5-methoxy-benzol 4-β-sulfatoethylsulfon |
| 7 | 1-Aminobenzol-3-vinylsulfon |
| 8 | 2-Aminonaphthalin-6-β-sulfatoethylsulfon-8-sulfonsäure |
| 9 | 2-Aminonaphthalin-6,8-di-β-sulfatoethylsulfon |
| 10 | 4-Ethylamino-3-(β-sulfatoethylsulfonyl)-anilin |
| 11 | 4-N-(β-Sulfatoethyl)-amino-3-(β-sulfatoethylsulfonyl)-anilin |
| 12 | 4-N-(β-Sulfoethyl)-amino-3-(β-sulfatoethylsulfonyl)-anilin |
| 13 | 3-(β-Sulfatoethylsulfonyl)-1,4-diamino-benzol |
| 14 | 4-N-[β-(4′-Sulfophenyl)-ethyl-]-amino-3-(β-sulfatoethylsulfonyl)-anilin |
| 15 | 4-[N-Methyl-N-(β-sulfoethyl)]-amino-3-(β-sulfatoethylsulfonyl)-anilin |

Gleichfalls wertvolle Farbstoffe erhält man, wenn man von den nachfolgend aufgeführten Aminodisazofarbstoffen ausgeht, die in Beispiel 3 und in der Tabelle 3 verwendeten Amine für den Austausch des zweiten Fluoratoms einsetzt und nach den Angaben von Beispiel 3 verfährt.

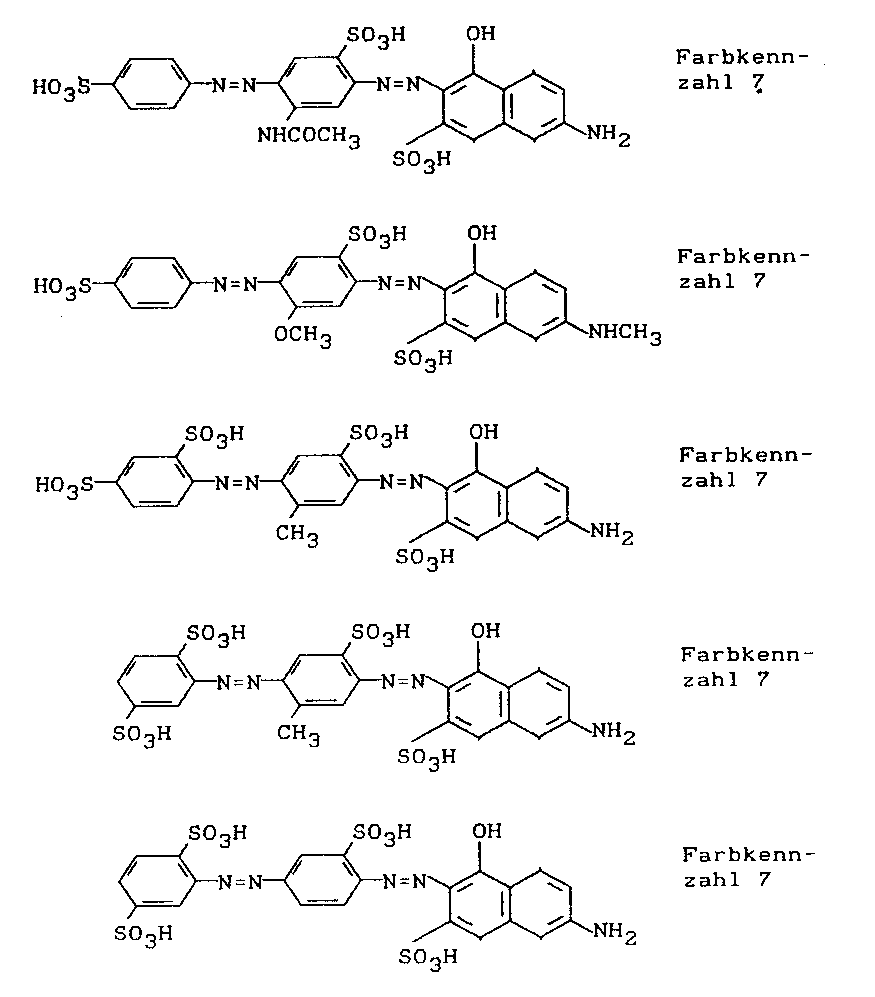

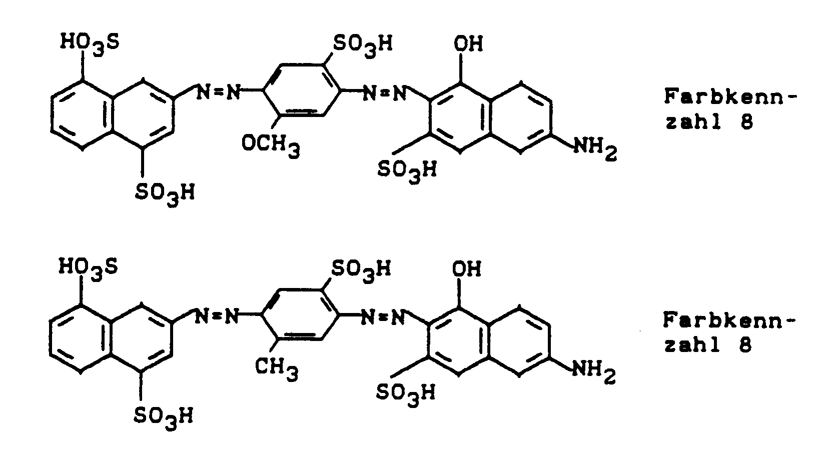

## Patentansprüche

1. Disazoreaktivfarbstoffe der Formel 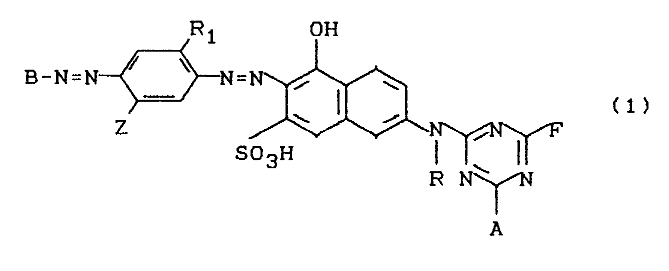 wobei 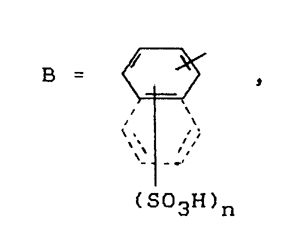 worin B übliche Substituenten enthalten kann und
n = 1, 2 oder 3
R = H oder CH₃
R₁ = SO₃H oder COOH
A = gegebenenfalls substituierte Aminogruppe
Z = H oder CH₃, C₂H₅, OCH₃, OC₂H₅, OCH₂CH₂OH, OCH₂CH₂OSO₃H, OH, 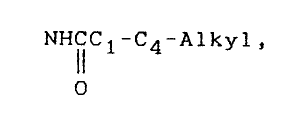 wobei die C₁-C₄-Alkylreste durch COOH, SO₃H, OSO₃H, OH substituiert sein können, 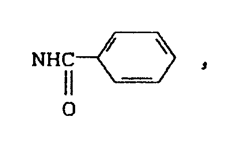 wobei der Phenylrest durch COOH SO₃H, Cl, CH₃, OCH₃ substituiert sein kann, 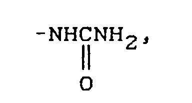 wobei für Z = H und R₁ = SO₃H

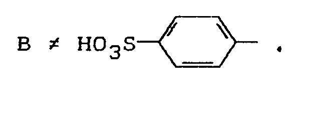

2. Farbstoffe des Anspruchs 1 mit
R = H,
R₁ = SO₃H₃
Z = H, CH₃, OH, OCH₃, NHCOCH₃,
B = Benzolrest mit n = 1 oder 2,
B = Naphthalinrest mit n = 2 oder 3,

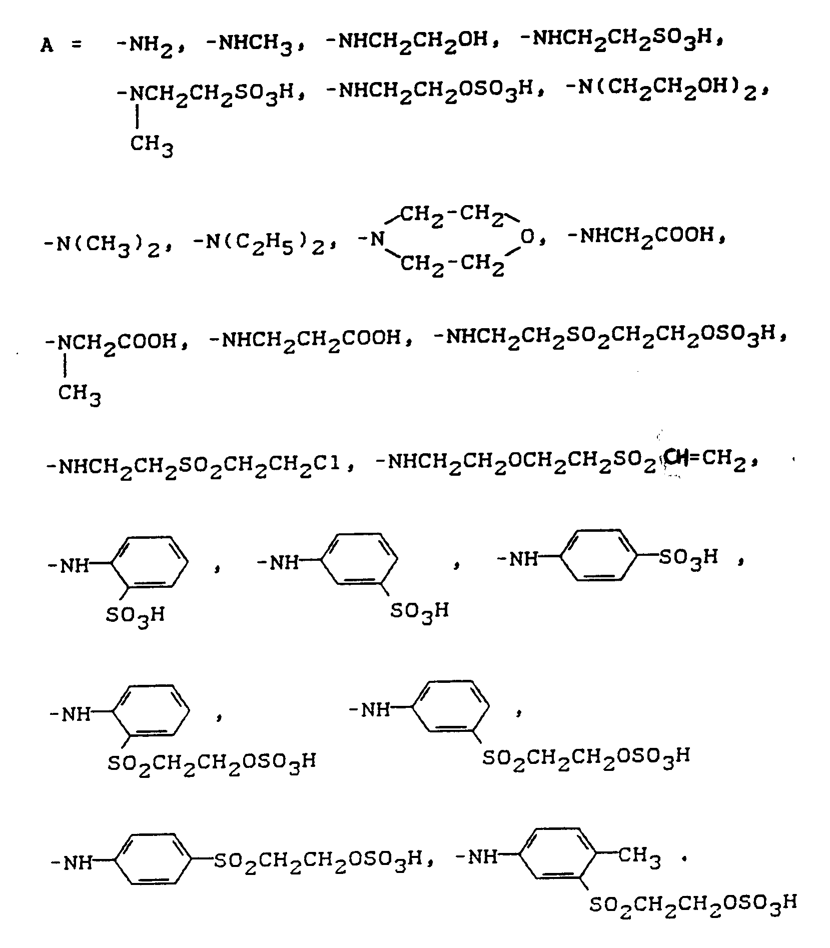

3. Verwendung der Farbstoffe der Ansprüche 1 und 2 zum Färben und Bedrucken von hydroxyl- und amidgruppenhaltigen Textilmaterialien.

## Claims

1. Disazo reactive dyestuffs of the formulax 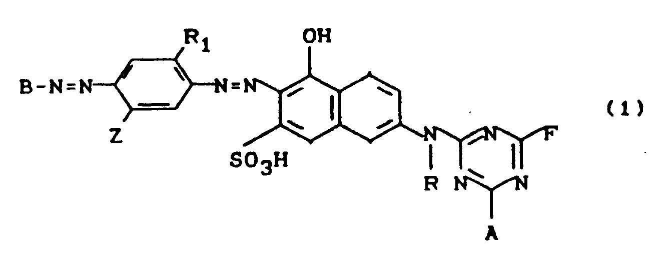 in which 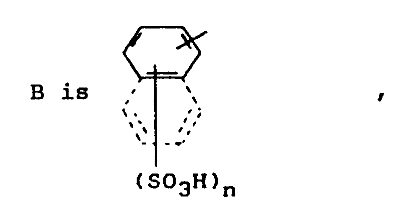 in which B can contain customary substituents and
n is 1, 2 or 3,
R is H or CH₃
R₁ is SO₃H or COOH
A is a substituted or unsubstituted amino group
Z is H or CH₃, C₂H₅, OCH₃, OC₂H₅, OCH₂CH₂OH, OCH₂CH₂OSO₃H or OH, 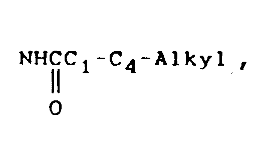 where the C₁-C₄-alkyl radicals can be substituted by COOH, SO₃H, OSO₃H or OH, 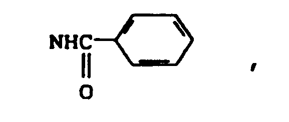 where the phenyl radical can be substituted by COOH, SO₃H, Cl, CH₃ or OCH₃, 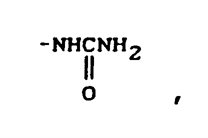 where B is not 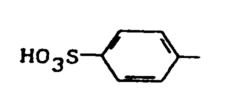 if Z is H and R₁ is SO₃H.

2. Dyestuffs of Claim 1 in which
R is H,
R₁ is SO₃H
Z is H, CH₃, OH, OCH₃, NHCOCH₃,
B is a benzene radical with n being 1 or 2,
B is a naphthalene radical with n being 2 or 3,

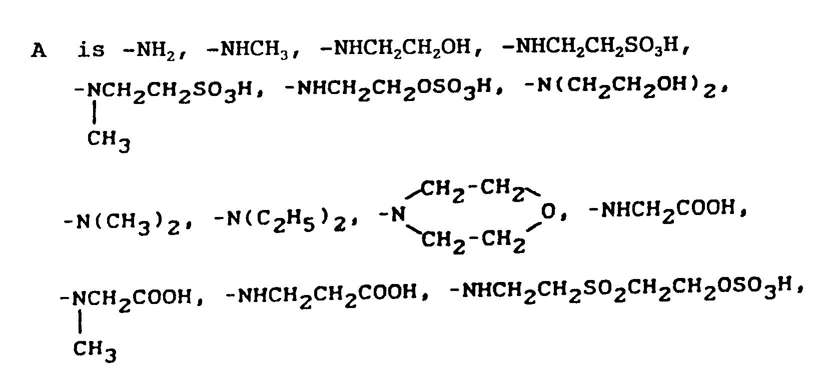

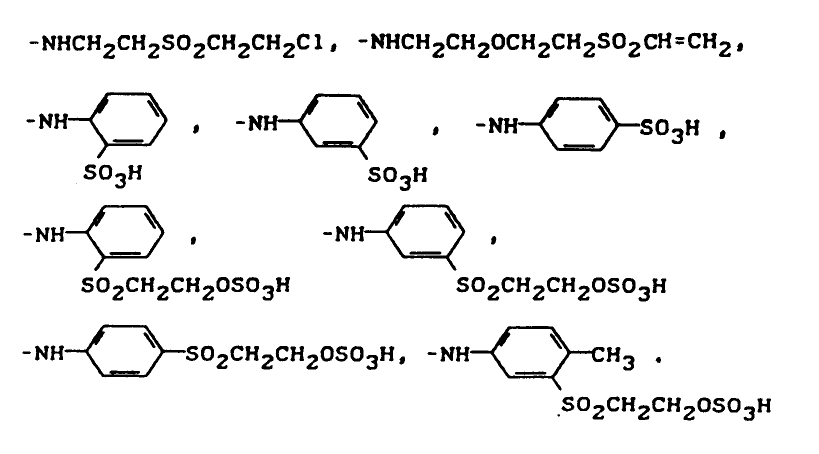

3. Use of the dyestuffs of Claims 1 and 2 for the dyeing and printing of hydroxyl- and amido-containing textile materials.

## Revendications

1. Colorants réactifs disazoïques de formule 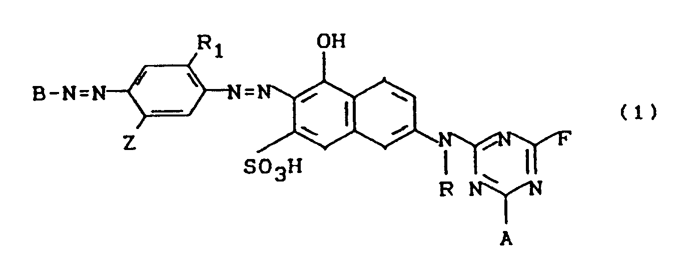 dans laquelle 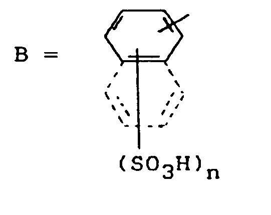 où B peut comporter des substituants classiques et
n = 1, 2 ou 3
R = H ou CH₃
R₁ = SO₃H ou COOH
A = groupe amino éventuellement substitué
Z = H ou CH₃, C₂H₅, OCH₃, OC₂H₅, OCH₂CH₂OH, OCH₂CH₂OSO₃H, OH, 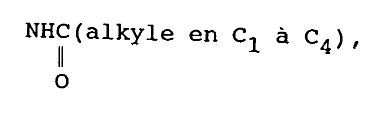 les restes alkyle en C₁ à C₄ pouvant être substitués par COOH, SO₃H, OSO₃H, OH, 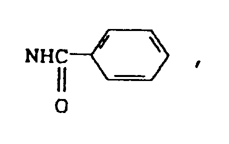 le reste phényle pouvant être substitué par COOH, SO₃H, Cl, CH₃, OCH₃, 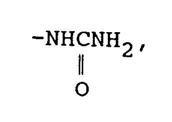 avec Z = H et R₁ = SO₃H

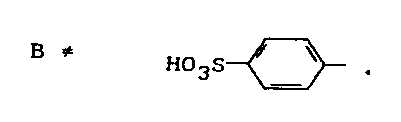

2. Colorants suivant la revendication 1, avec
R = H,
R₁ = SO₃H,
Z = H, CH₃, OH, OCH₃, NHCOCH₃,
B = reste de benzène avec n = 1 ou 2,
B = reste de naphtalène avec n = 2 ou 3,

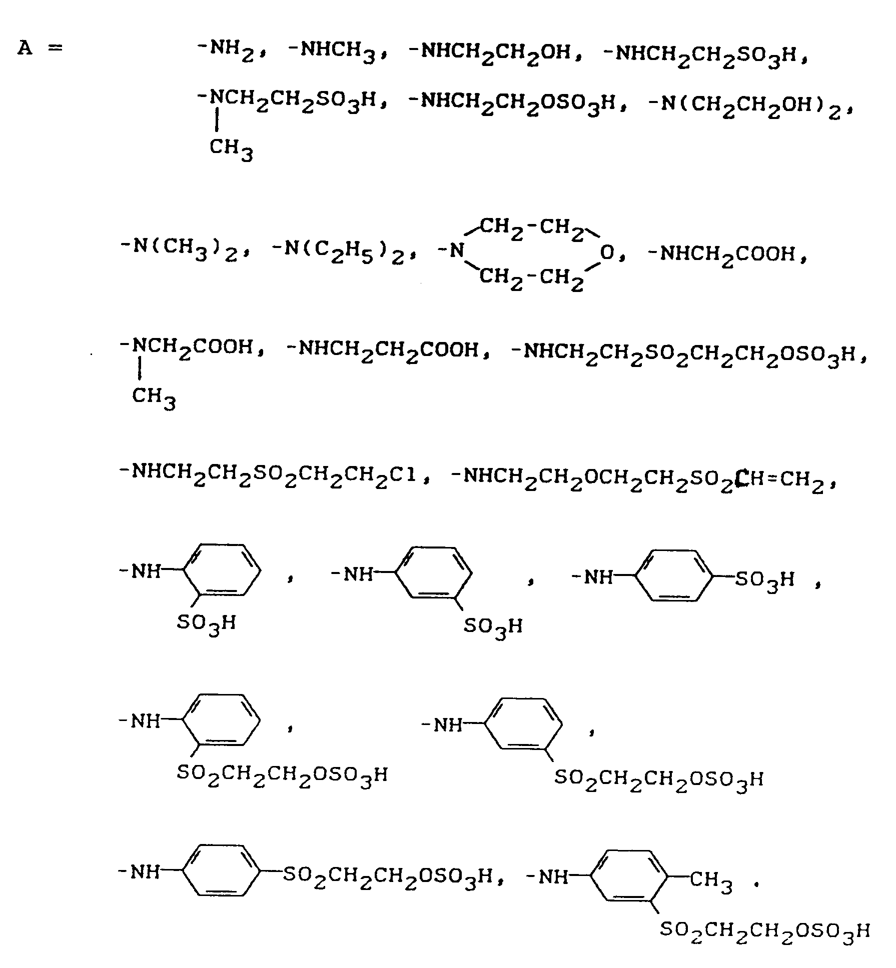

3. Utilisation des colorants suivant les revendications 1 et 2 pour la teinture et l'impression de matières textiles contenant des groupes hydroxyle et des groupes amide.
